# EUROPÄISCHE PATENTSCHRIFT

(11) **EP 2 091 794 B1**
(45) Veröffentlichungstag und Bekanntmachung des Hinweises auf die Patenterteilung: **02.06.2010**
(21) Anmeldenummer: 07822201.5
(22) Anmeldetag: 05.11.2007
(51) Int. Cl.: B60T 7/04, B60T 17/22

(54) **VERFAHREN ZUR EINSTELLUNG VON KENNGRÖßEN EINES BREMSSYSTEMS IN EINEM KRAFTFAHRZEUG**
METHOD FOR SETTING CHARACTERISTIC VARIABLES OF A BRAKE SYSTEM IN A MOTOR VEHICLE
PROCÉDÉ DE RÉGLAGE DE CARACTÉRISTIQUES D'UN SYSTÈME DE FREINAGE DANS UN VÉHICULE AUTOMOBILE

(30) Priorität: 15.11.2006 DE 102006053809
(43) Veröffentlichungstag der Anmeldung: 26.08.2009
(73) Patentinhaber: Robert Bosch GmbH, 70442 Stuttgart (DE)
(72) Erfinder: LICH, Thomas, 71409 Schwaikheim (DE); EWERHART, Frank, 74248 Ellhoffen (DE); MARCHTHALER, Reiner, 73333 Gingen (DE); STABREY, Stephan, 70174 Stuttgart (DE); GEORGI, Andreas, 71701 Schwieberdingen (DE)
(86) Internationale Anmeldenummer: PCT/EP2007/061872
(87) Internationale Veröffentlichungsnummer: WO 2008/058864

(56) Entgegenhaltungen:
- DE-C1- 4 325 940
- GB-A- 2 321 535
- US-A1- 2004 204 799
- US-A1- 2005 096 974

## Beschreibung

Die Erfindung bezieht sich auf ein Verfahren zur Einstellung von Kenngrößen eines Bremssystems in einem Kraftfahrzeug.

### Stand der Technik

In der DE 43 25 940 C1 wird ein so genannter Bremsassistent in einem Kraftfahrzeug beschrieben, der eine hydraulisch gesteuerte Bremsanlage umfasst, wobei der Bremsdruck über elektrisch ansteuerbare Regelventile einstellbar ist. Um in kritischen Fahrsituationen eine Verkürzung des Bremsweges zu erreichen, werden Fahrerreaktionen, insbesondere die Betätigungsgeschwindigkeit des Bremspedals und der vom Fahrer erzeugte Bremspedaldruck gemessen und bei Überschreitung vorgegebener Grenzwerte Signale zur Erhöhung des Bremsdruckes generiert. Durch Verstärkung des vom Fahrer vorgegebenen Bremsdruckes kann ein maximal möglicher Bremsdruck aufgebaut werden, wodurch sich eine signifikante Bremswegverkürzung erzielen lässt. Die automatische Verstärkung des Bremsdruckes ermöglicht es, das theoretische Potential eine Bremssystems in bestmöglicher Weise auszuschöpfen.

GB 2321535 A beschreibt eine Antriebsstrangsteuerung, wobei Fahrstil einer der Eingangsparameter ist.

Um sicherzustellen, dass die Aktivierung des Bremsassistenten nur in Notfällen erfolgt und um Fehlauslösungen im normalen Fahrbetrieb zu vermeiden, wird die Parametrierung des Bremssystems üblicherweise in der Weise gestaltet, dass die Auslösung des Bremsassistenten bei normalen Fahrten nicht erfolgt. Die Detektierung einer Notsituation und daraufhin aktiviertem Bremsassistenten liegt nur vor, wenn die Betätigung des Bremspedals im Hinblick auf Pedalgeschwindigkeit und Druckaufbau erheblich oberhalb eines dem normalen Bremsvorgang zugeordneten Wertebereichs liegt. Dies birgt aber die Gefahr, dass eine Notfallsituation nicht korrekt erfasst und der Bremsweg nicht in bestmöglicher Weise verkürzt wird.

### Offenbarung der Erfindung

Der Erfindung liegt die Aufgabe zugrunde, den Bremsvorgang in einem Kraftfahrzeug zu optimieren. Vorteilhafterweise sollen Notfallsituationen sicher erkannt und entsprechende Maßnahmen zur Bremswegverkürzung getroffen werden.

Diese Aufgabe wird erfindungsgemäß mit den Merkmalen des Anspruches 1 gelöst. Die Unteransprüche geben zweckmäßige Weiterbildungen an.

Bei dem erfindungsgemäßen Verfahren zur Einstellung von Kenngrößen eines Bremssystems in einem Kraftfahrzeug werden mehrere, unterschiedliche Fahrertypklassen definiert, denen jeweils ein Satz von Bremssystem-Kenngrößen zugeordnet sind. Über die Typisierung der Fahrer und Zuordnung in diskrete Klassen kann eine Vorauswahl und Einengung der spezifischen Bremssystem-Parameter getroffen werden. Hierdurch ist es möglich, unabhängig von der aktuellen Fahrsituation, insbesondere noch vor dem Eintreten einer Notfallsituation auf den jeweiligen Fahrertyp angepasste Bremssystem-Parameter auszuwählen und zu aktivieren und hierdurch die Qualität des Bremsvorganges zu verbessern. Bei den anzupassenden Bremssystem-Parametern handelt es sich insbesondere um Soll-Schwellenwerte, die maßgebend sind für die Auslösung bzw. Aktivierung eines Bremsassistenten zur Unterstützung des Bremsvorganges in Notfällen, insbesondere Schwellenwerte für die Pedalgeschwindigkeit und den Pedaldruck. Gegebenenfalls kommt auch eine Anpassung von Bremsparametern in Betracht, die den Bremsvorgang an sich beeinflussen, beispielsweise das Maß der Bremskraftverstärkung.

Bei dem Verfahren wird zunächst eine Fahrertyperkennung durchgeführt, wobei der erkannte Fahrertyp einer bestehenden Fahrertypklasse im Bremssystem zugeordnet wird. Anschließend werden in einem zweiten Schritt die Bremssystemkenngrößen, die zu dieser Fahrertypklasse gehören, aktiviert. Als Bremssystemkenngrößen bzw. - parameter kommen insbesondere der Bremsdruck im Bremssystem und daraus abgeleitete bzw. zusammenhängende Größen in Betracht.

Diskrete Fahrertypklassen vorzusehen, hat gegenüber bestehenden, aus dem Stand der Technik bekannten Systemen, bei denen aus aktuellen Fahrerreaktionen die Fahrdynamik beeinflussende Grenzwerte ermittelt werden, den Vorteil, dass zusätzliche, fahrerindividuelle Aspekte berücksichtigt werden können, die sich auf das Fahrerverhalten auswirken. So ist es beispielsweise möglich, eine Geschlechterunterscheidung zwischen männlichem und weiblichem Fahrer zu treffen, um hiermit dem Umstand Rechnung zu tragen, dass Männer üblicherweise in Notfallsituationen das Bremspedal mit höherer Kraft betätigen als Frauen. Entsprechend kann ein unterschiedlicher Bremssystem-Parametersatz aktiviert werden, mit der Folge, dass im Falle eines weiblichen Fahrers in Notsituationen die Auslöseschwelle für die Aktivierung des Bremsassistenten herabgesetzt und/oder ein höherer zusätzlicher Bremsdruck erzeugt wird als bei einem männlichen Fahrer.

Im Prinzip können eine Vielzahl unterschiedlicher Fahrertypklassen vorgesehen sein. Als vorteilhaft hat sich neben der Unterscheidung zwischen Mann und Frau auch eine Alterskategorisierung erwiesen, um mit zunehmendem Alter abnehmende Reaktionszeiten des Fahrers berücksichtigen zu können. Wird beispielsweise festgestellt, dass es sich um einen älteren Fahrer handelt, kann in Notfällen die Auslöseschwelle herabgesetzt und gegebenenfalls ein schnellerer Druckaufbau als bei einem jüngeren Fahrer durchgeführt werden.

Als weitere Kategorisierung kommt die Erkennung der Körpergröße des Fahrers und entsprechende Einordnung in eine Klasse für die Fahrergröße in Betracht. Dies hat insbesondere im Fall sehr kleiner Fahrer Auswirkungen, bei denen andere Hebelverhältnisse als bei großen Fahrern herrschen und beispielsweise ein Durchtreten des Bremspedals größere Mühe erfordert als bei großen Fahrern.

Die Fahrertyperkennung wird vorteilhafterweise mithilfe von Sensoren selbsttätig im Fahrzeug durchgeführt. Dies erfolgt beispielsweise unmittelbar nach dem Start des Fahrzeuges mittels unterschiedlicher Sensoren. So ist es beispielsweise möglich, über eine in den Fahrersitz integrierte Gewichtsermittlungseinrichtung das Fahrergewicht zu ermitteln oder über eine Sitzpositionsermittlungseinrichtung die aktuelle Sitzposition. Werden diese beiden Größen, also das Fahrergewicht und die Sitzposition zusammen betrachtet, lässt sich mit einer gewissen Wahrscheinlichkeit die Unterscheidung zwischen Mann und Frau treffen. Ist beispielsweise das Gewicht relativ gering und befindet sich der Fahrersitzes in einer nach vorne geschobenen, an das Lenkrad angenäherten Position, kann mit erhöhter Wahrscheinlichkeit auf eine Frau geschlossen werden, wohingegen bei einem hohen Gewicht und einer zurückgeschobenen Sitzposition die Wahrscheinlichkeit hoch ist, dass der Fahrer ein Mann ist. Gegebenenfalls wird auch die Position des Fahrers im vorderen oder hinteren Sitzflächenbereich als Kriterium herangezogen.

Als Altersermittlungseinrichtung zur selbsttätigen Ermittlung der Alterskategorie wird beispielsweise ein kapazitiver Sensor eingesetzt, mit dem der Wassergehalt im Körper ermittelt werden kann. Dem liegt der Gedanke zugrunde, dass sich der prozentuale Wassergehalt im Körper mit dem Alter ändert. Über einen kapazitiven Sensor, dessen Signal von der Druckbelastung abhängt, kann ermittelt werden, wie weit sich das Gewebe des Fahrers unter Druck verändert, was als Maßstab für das Alter herangezogen werden kann. Eine alternative Methode zur Ermittlung des Alters sieht den Einsatz eines Ultraschallsensors vor, mit dem die Knochendichte bzw. die Knochenmarksstruktur bestimmt werden kann, aus der ebenfalls das Alter des Fahrers geschätzt werden kann.

Ungeachtet der selbsttätigen Fahrertyperkennung mithilfe einer im Fahrzeug mitzuführenden Sensorik ist es auch möglich, die Fahrertyperkennung manuell zu aktivieren bzw. einzustellen. Beispielsweise können in einem Regel- und Steuergerät im Fahrzeug den Fahrertyp beschreibende Parameter abgespeichert sein, die vom Fahrer direkt aktiviert werden können. Außerdem ist es möglich, derartige abgespeicherte Informationen über den aktuellen Fahrer anhand typischer Merkmale, unter anderem anhand typischer Fahrerreaktionen selbsttätig zu aktivieren.

Zusätzlich zu der Einordnung in diskrete Fahrertypklassen, denen jeweils ein Satz definierter Bremssystemkenngrößen zugeordnet sind, kann auch eine kontinuierliche Umparametrierung dieser Kenngrößen durchgeführt werden. Hierzu können typische Fahrerreaktionen gemessen werden, beispielsweise die Lenkradbetätigung oder die Betätigung des Gaspedals bzw. des Bremspedals, und gemäß eines funktionalen Zusammenhangs Grenzwerte im Bremsassistenten festgelegt werden. Eine Annäherung an eine kontinuierliche Umparametrierung ist im Übrigen auch durch eine Verkleinerung der diskreten Schritte, also durch Aufnahme einer Vielzahl von Fahrertypklassen möglich. In allen Fällen erfolgt die Umparametrierung im Bremssystem vorteilhafterweise noch vor dem Eintritt einer Gefahrensituation.

Weitere Vorteile und zweckmäßige Ausführungen sind den weiteren Ansprüchen, der Figurenbeschreibung und den Zeichnungen zu entnehmen. Es zeigen:
- Fig. 1: in perspektivischer Ansicht ein Kraftfahrzeug mit einem darin angeordneten Regel- bzw. Steuergerät, das Stellsignale zur Beaufschlagung eines Bremssystems sowie diverser weiterer Nebenaggregate im Fahrzeug erzeugt,
- Fig. 2: ein Ablaufdiagramm zur Durchführung der Parameteränderung im Bremssystem, um fahrertypabhängig eine bestmögliche Bremswegverkürzung zu erzielen.

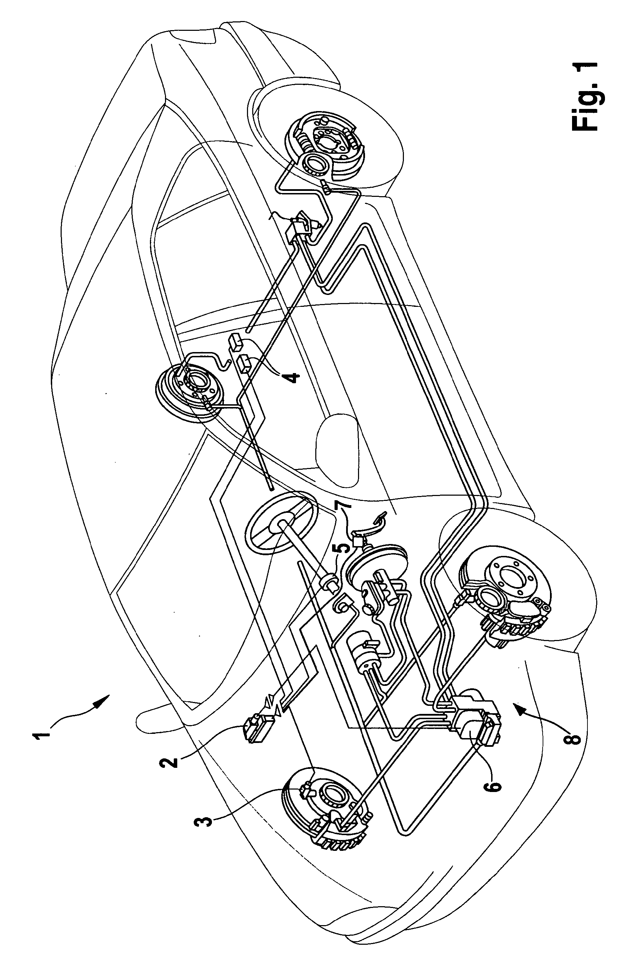

In Fig. 1 ist ein Kraftfahrzeug 1 mit einem Regel- bzw. Steuergerät 2 dargestellt, welches mit verschiedenen Sensoren 3, 4, 5 und 7 verbunden ist, über die das Regel- und Steuergerät Sensorsignale empfängt, welche aktuelle Fahrzeugzustands- und Betriebsgrößen des Kraftfahrzeugs übermitteln. Aus den zugeführten Sensorsignalen generiert das Regel- und Steuergerät 2 Stellsignale, die der Brennkraftmaschine bzw. den diversen Nebenaggregaten im Kraftfahrzeug zur Beeinflussung des Fahrzeugzustandes zugeführt werden. Dargestellt ist in Fig. 1 ein Hydraulikaggregat 6 als Teil eines Bremssystems 8, das von den Stellsignalen des Regel- und Steuergerätes beeinflussbar ist. Hierdurch kann ein Bremsassistent realisiert werden, der funktional die Bestandteile Fahrzeugbremsen als Teil des Bremssystems, Hydraulikaggregat 6 und das Regel- und Steuergerät 2 umfasst. Der Bremsassistent erkennt Notfallsituationen und unterstützt einen vom Fahrer eingeleiteten Bremsvorgang durch Erhöhung des Bremsdruckes.

Das Sensorsystem im Fahrzeug 1 umfasst einen Raddrehzahlsensor 3 an einem oder mehreren Fahrzeugrädern, einen Giergeschwindigkeits- und/oder Beschleunigungssensor 4 zur Ermittlung aktueller Beschleunigungen bzw. der Giergeschwindigkeit, einen Lenkradwinkelsensor 5 zur Ermittlung des aktuellen Lenkradwinkels und einen Bremspedalsensor zur Ermittlung der aktuellen Bremspedalbetätigung, insbesondere der Pedalgeschwindigkeit und des Druckes, der vom Fahrer auf das Bremspedal ausgeübt wird. Darüber hinaus umfasst die Sensorik vorteilhafterweise eine Gewichtsermittlungseinrichtung, die in den Fahrersitz integriert ist, um das Gewicht des Fahrers zu ermitteln, sowie eine Sitzpositionsermittlungseinrichtung, die ebenfalls in den Fahrersitz integriert ist, um die aktuelle Sitzposition des Fahrers feststellen zu können. Die Gewichtsermittlungseinrichtung ist beispielsweise als Kraftmessbolzen oder als sogenannte OC-Matte (Occupant Classification Matte) ausgeführt. Über eine derartige Matte ist gegebenenfalls auch die Sitzpositionsermittlung durchführbar zur Unterscheidung, ob der Fahrer im Bereich der vorderen oder hinteren Sitzfläche sitzt. Außerdem wird die Position des Fahrersitzes im Fahrzeug ermittelt und festgestellt, ob der Fahrersitz sich in einer dem Lenkrad angenäherten, vorgeschobenen oder einer zurückgeschobenen Position befindet. Darüber hinaus können auch Kameratechniken eingesetzt werden, um die Körpergröße und/oder die Position des Fahrers und gegebenenfalls auch des Beifahrers zu erfassen. Schließlich kann die Sensorik auch einen kapazitiven Sensor umfassen, der insbesondere ebenfalls in den Fahrersitz integriert ist und auf Druck Sensorsignale erzeugt, die die Gewebespannung im Körper abbilden, woraus das Alter des Fahrers geschätzt werden kann. Eine derartige Altersermittlungseinrichtung ist alternativ oder zusätzlich auch in Form eines Ultraschallsensors möglich, mit dessen Hilfe die Knochendichte bzw. die Knochenmarksstruktur ermittelt werden kann, über die ebenfalls das Alter des Fahrers geschätzt werden kann.

Mithilfe der im Kraftfahrzeug 1 vorhandenen Sensoren kann eine Fahrertyperkennung selbsttätig durchgeführt werden. Die Sensorsignale ermitteln zum einen fahrertypische Reaktionen, beispielsweise bei der Betätigung des Lenkrades oder des Bremspedales, und zum andern reaktionsunabhängige, fahrertypspezifische Eigenschaften wie die aktuelle Sitzposition im vorderen oder hinteren Bereich der Sitzfläche, das Fahrergewicht, die Fahrergröße und das geschätzte Alter des Fahrers. Mithilfe dieser Informationen kann der Fahrer einer Fahrertypklasse zugeordnet werden, wobei vorteilhafterweise wenigstens zwei Fahrertypklassen für verschiedene Altersklassen, wenigstens zwei Fahrertypklassen für verschiedene Fahrergrößen, zwei Fahrertypklassen für die Unterscheidung Mann/Frau und wenigstens zwei Fahrertypklassen für verschiedene Altersstufen vorgesehen sind. Die Signale aus den Sensoren im Fahrzeug erlauben eine Zuordnung des aktuellen Fahrers in jede der genannten Fahrertypklassen. Da jeder Fahrertypklasse jeweils ein Satz definierter Bremssystemparameter zugeordnet ist, kann eine fahrerindividuelle Anpassung des Bremssystems noch vor dem Eintreten einer Gefahren- bzw. Notfallsituation durchgeführt werden. Im Gefahrenfall ist damit ein schnellerer Druckaufbau im Bremssystem als Funktionalität des Bremsassistenten möglich, was zu einer Bremswegverkürzung führt.

Insgesamt erhält man auf diese Weise ein mehrdimensionales, diskretes Fahrertypklassensystem, wobei jeder Fahrer in mehrere Klassen eingeordnet wird. Beispielsweise wird ein männlicher Fahrer innerhalb der Geschlechter-Fahrertypklasse als "Mann" eingeordnet, in der Alters-Fahrertypklasse entsprechend seinem Alter beispielsweise in die Kategorie "junger Fahrer", "Fahrer mittleren Alters" oder "älterer Fahrer"; darüber hinaus ist eine Klassifizierung als Person leichteren oder höheren Gewichts möglich. Aus der Kombination dieser diskreten Zuordnungen in die jeweiligen Fahrertypklassen ergeben sich individuell angepassten Bremssystem-Parametersätze.

Die Zuordnung in die verschiedenen Fahrertypklassen ist zum Teil direkt möglich, beispielsweise über die Ermittlung des Gewichtes in die Einstufung Fahrer mit höherem oder geringerem Gewicht, zum Teil aber auch nur über Wahrscheinlichkeiten bzw. Plausibilitäten durchführbar. So ist die Unterscheidung des Geschlechtes mit einer gewissen Wahrscheinlichkeit aus den Sensorsignalen über das Fahrergewicht und die Sitzposition des Fahrers bzw. der Position des Fahrersitzes durchführbar. Handelt es sich um eine Person mit verhältnismäßig geringem Gewicht, die eine Sitzposition im Bereich der vorderen Sitzfläche einnimmt oder deren Fahrersitz nach vorne geschoben ist, besteht eine erhöhte Wahrscheinlichkeit, dass es sich um eine Frau handelt. Befindet sich dagegen die Sitzposition im Bereich der hinteren Sitzfläche des Fahrersitzes oder ist der Fahrersitz nach hinten geschoben und ist das Gewicht verhältnismäßig hoch, besteht eine erhöhte Wahrscheinlichkeit, dass der Fahrer ein Mann ist.

Zusätzlich bzw. Alternativ zu der selbsttätigen Fahrertyperkennung kann diese auch manuell eingestellt bzw. unterstützt werden. Beispielsweise können personenbezogene Daten im Regel- und Steuergerät abgespeichert werden, die von dem entsprechenden Fahrer aktiviert werden. Außerdem ist es möglich, die Aktivierung dieser personenbezogenen Daten selbsttätig über die Sensorsignale durchzuführen.

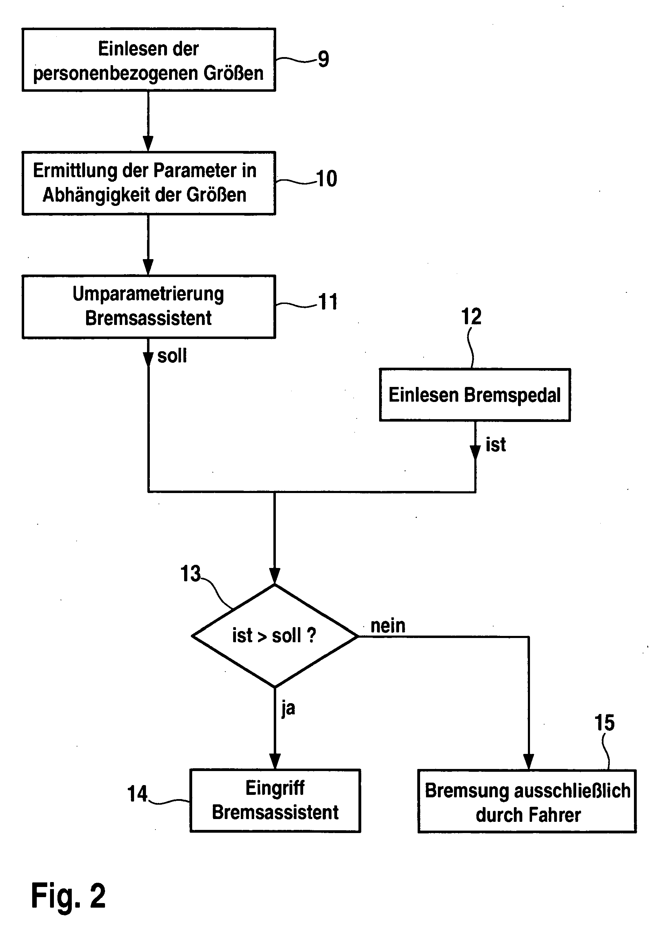

Wie dem Ablaufdiagramm nach Fig. 2 zu entnehmen, wird in den Verfahrensschritten 9, 10 und 11 zunächst eine Fahrertypklassifizierung durchgeführt und entsprechend ein Satz vorgegebener Parameter des Bremssystems aktiviert. Gemäß Verfahrensschritt 9 werden personenbezogene Größen eingelesen bzw. ermittelt, insbesondere mithilfe der Sensorik im Fahrzeug, ggf. auch durch manuelle Aktivierung durch den Fahrer. Im Verfahrensschritt 10 werden nach erfolgter Fahrertyperkennung und der Zuordnung in die entsprechenden Fahrertypklassen die Bremssystem-Parameter festgelegt. Da üblicherweise eine Zuordnung in eine Mehrzahl unterschiedlicher Fahrertypklassen erfolgt, beispielsweise für das Geschlecht, das Gewicht, die Größe und das Alter, werden ausgehend von einem Ausgangsparametersatz Zuschläge bzw. Abschläge in den einzelnen Parametergrößen je nach Zuordnung durchgeführt. Im Verfahrensschritt 11 wird anschießend der Bremsassistent mit den neu ermittelten Kenngrößen umparametriert, die Sollgrößen darstellen, insbesondere Schwellenwerte, welche zur Auslösung bzw. Aktivierung des Bremsassistenten überschritten werden müssen. Die Sollgrößen werden anschließend im Verfahrensschritt 13 einer Abfrage zugrunde gelegt.

Wie in Verfahrensschritt 12 dargestellt, wird über den Bremspedalsensor laufend die Bremspedalbetätigung sensiert. Es werden Ist-Werte aufgenommen, die die Pedalbetätigung durch den Fahrer darstellen, beispielsweise die Pedalgeschwindigkeit und der Pedaldruck. Diese Ist-Werte werden anschließend ebenso wie die Sollwerte aus dem Verfahrensschritt 11 dem folgenden Verfahrensschritt 13 zugeführt, wo ein Vergleich zwischen den Ist- und den Soll-Werte durchgeführt und überprüft wird, ob die Voraussetzungen für die Aktivierung des Bremsassistenten vorliegen, was der Fall ist, wenn die Pedalbetätigung die fahrerindividuellen Grenzwerte übersteigt. In diesem Fall wird der ja-Verzweigung entsprechend zum Verfahrensschritt 14 fortgefahren und der Bremsvorgang mit Unterstützung durch den Bremsassistenten durchgeführt, um das maximale Bremspotential auszuschöpfen und eine bestmögliche Verkürzung des Bremsweges zu erreichen.

Liegt dagegen die Pedalbetätigung unterhalb der zugeordneten Schwellwerte, so sind die Voraussetzungen für die Aktivierung des Bremsassistenten nicht gegeben. In diesem Fall wird der nein-Verzweigung folgend zum Verfahrensschritt 15 verzweigt, die Bremsung erfolgt ausschließlich über die Pedalbetätigung des Fahrers ohne Unterstützung durch den Bremsassistenten.

## Patentansprüche

1. Verfahren zur Einstellung von Kenngrößen eines Bremssystems in einem Kraftfahrzeug, wobei eine Mehrzahl unterschiedlicher Fahrertypklassen vorgesehen sind, denen jeweils ein Satz definierter Bremssystem-Kenngrößen zugeordnet sind, mit den folgenden Verfahrensschritten:
- Durchführen einer Fahrertyperkennung und Einordnen des erkannten Fahrertyp in eine oder mehrere zugeordnete Fahrertypklassen,
- Aktivieren der Bremssystem-Kenngrößen dieser Fahrertypklassen.

2. Verfahren nach Anspruch 1,
**dadurch gekennzeichnet, dass** zwei Fahrertypklassen für verschiedene Geschlechter vorgesehen sind.

3. Verfahren nach Anspruch 1 oder 2,
**dadurch gekennzeichnet, dass** zumindest zwei Fahrertypklassen für verschiedene Altersklassen vorgesehen sind.

4. Verfahren nach einem der Ansprüche 1 bis 3,
**dadurch gekennzeichnet, dass** zumindest zwei Fahrertypklassen für verschiedene Fahrergrößen vorgesehen sind.

5. Verfahren nach einem der Ansprüche 1 bis 4,
**dadurch gekennzeichnet, dass** die Fahrertyperkennung mithilfe von Sensoren selbsttätig durchgeführt wird.

6. Verfahren nach Anspruch 5,
**dadurch gekennzeichnet, dass** über eine in den Fahrersitz integrierte Gewichtsermittlungseinrichtung das Gewicht des Fahrers ermittelt wird.

7. Verfahren nach Anspruch 5 oder 6,
**dadurch gekennzeichnet, dass** über eine Sitzpositionsermittlungseinrichtung die aktuelle Position des Fahrersitzes ermittelt wird.

8. Verfahren nach Anspruch 6 und 7,
**dadurch gekennzeichnet, dass** mittels einer Auswertelogik auf den Fahrertyp "Frau" erkannt wird, falls das Gewicht gering ist und der Fahrersitz sich in einer nach vorne verschobenen, dem Lenkrad angenäherten Position befindet, und auf den Fahrertyp "Mann" erkannt wird, falls das Gewicht höher ist und der Fahrersitz nach hinten verschoben ist.

9. Verfahren nach einem der Ansprüche 5 bis 8,
**dadurch gekennzeichnet, dass** über eine Altersermittlungseinrichtung, beispielsweise einem kapazitiven Sensor zur Ermittlung des Wassergehalts im Körper oder einem Ultraschallsensor zur Ermittlung der Knochendichte bzw. der Knochenmarksstruktur, das Alter des Fahrers geschätzt wird.

10. Verfahren nach einem der Ansprüche 1 bis 9,
**dadurch gekennzeichnet, dass** die Fahrertyperkennung manuell eingestellt bzw. aktiviert wird.

11. Verfahren nach einem der Ansprüche 1 bis 10,
**dadurch gekennzeichnet, dass** mindestens eine Bremssystem-Kenngröße eines Bremsassistentensystems eingestellt wird.

12. Verfahren nach Anspruch 11,
**dadurch gekennzeichnet, dass** es sich bei der Kenngröße des Bremsassistentensystems um die Pedalgeschwindigkeit handelt.

13. Verfahren nach Anspruch 11 oder 12,
**dadurch gekennzeichnet, dass** es sich bei der Kenngröße des Bremsassistentensystems um den Pedaldruck handelt.

14. Steuergerät zur Durchführung des Verfahrens nach einem der Ansprüche 1 bis 13.

## Claims

1. Method for setting characteristic variables of a brake system in a motor vehicle, wherein a multiplicity of different classes of driver type are provided and are each assigned a set of defined brake system characteristic variables, having the following method steps:
- carrying out a detection of a driver type and assignment of the detected driver type to one or more allocated classes of driver type, and
- activation of the brake system characteristic variables of these classes of driver type.

2. Method according to Claim 1,
**characterized in that** two classes of driver type are provided for different sexes.

3. Method according to Claim 1 or 2,
**characterized in that** at least two classes of driver type are provided for different age classes.

4. Method according to one of Claims 1 to 3,
**characterized in that** at least two classes of driver type are provided for different sizes of driver.

5. Method according to one of Claims 1 to 4,
**characterized in that** the detection of the driver type is carried out automatically using sensors.

6. Method according to Claim 5,
**characterized in that** the weight of the driver is determined by means of a weight-determining device which is integrated into the driver's seat.

7. Method according to Claim 5 or 6,
**characterized in that** the current position of the driver's seat is determined by means of a seat-position-determining device.

8. Method according to Claims 6 and 7,
**characterized in that** the "woman" driver type is detected by means of an evaluation logic if the weight is low and the driver's seat is located in a position which is pushed forward and is positioned close to the steering wheel, and the "man" driver type is detected if the weight is larger and the driver's seat is pushed rearward.

9. Method according to one of Claims 5 to 8,
**characterized in that** the age of the driver is estimated by means of an age-determining device, for example a capacitive sensor for determining the water content in the body or an ultrasonic sensor for determining the bone density or the bone marrow structure.

10. Method according to one of Claims 1 to 9,
**characterized in that** the detection of the driver type is set or activated manually.

11. Method according to one of Claims 1 to 10,
**characterized in that** at least one brake system characteristic variable of a brake assistance system is set.

12. Method according to Claim 11,
**characterized in that** the characteristic variable of the brake assistance system is the speed of the pedal.

13. Method according to Claim 11 or 12,
**characterized in that** the characteristic variable of the brake assistance system is the pedal pressure.

14. Control unit for carrying out the method according to one of Claims 1 to 13.

## Revendications

1. Procédé de réglage de grandeurs caractéristiques du système de freinage d'un véhicule automobile, dans lequel plusieurs classes différentes de types de conducteur à chacune desquelles un jeu de grandeurs caractéristiques définies du système de freinage est associé sont prévues, le procédé présentant les étapes suivantes :
- détection du type de conducteur et placement du type de conducteur détecté dans une ou plusieurs classes correspondantes de types de conducteur et
- activation des grandeurs caractéristiques du système de freinage pour cette classe de types de conducteur.

2. Procédé selon la revendication 1, **caractérisé en ce que** deux types de classes de conducteur sont prévus pour les sexes différents.

3. Procédé selon les revendications 1 ou 2, **caractérisé en ce qu'**au moins deux classes de types de conducteur sont prévues pour différentes classes d'âge.

4. Procédé selon l'une des revendications 1 à 3, **caractérisé en ce qu'**au moins deux classes de types de conducteur sont prévues pour différentes tailles de conducteur.

5. Procédé selon l'une des revendications 1 à 4, **caractérisé en ce que** la détection du type de conducteur est réalisée automatiquement à l'aide de détecteurs.

6. Procédé selon la revendication 5, **caractérisé en ce que** le poids du conducteur est déterminé par un dispositif de détermination du poids intégré dans le siège du conducteur.

7. Procédé selon l'une des revendications 5 ou 6, **caractérisé en ce que** la position effective du siège du conducteur est déterminée au moyen d'un dispositif de détermination de position du siège.

8. Procédé selon les revendications 6 et 7, **caractérisé en ce qu'**une logique d'évaluation détecte le type de conducteur "femme" au cas où le poids est faible et le siège du conducteur se trouve en une position déplacée vers l'avant et approchée du volant et détecte le type de conducteur "homme" au cas où le poids est plus élevé et le siège du conducteur est déplacé vers l'arrière.

9. Procédé selon l'une des revendications 5 à 8, **caractérisé en ce que** l'âge du conducteur est estimé à l'aide d'un dispositif de détermination de l'âge, par exemple un détecteur capacitif qui détermine la teneur en eau du corps ou un détecteur à ultrasons qui détermine la densité osseuse ou la structure de la moelle osseuse.

10. Procédé selon l'une des revendications 1 à 9, **caractérisé en ce que** la détection du type de conducteur est réglée ou activée manuellement.

11. Procédé selon l'une des revendications 1 à 10, **caractérisé en ce qu'**au moins une grandeur caractéristique du système de freinage d'un système d'assistance au freinage est réglée.

12. Procédé selon la revendication 11, **caractérisé en ce que** la grandeur caractéristique du système d'assistance au freinage est la vitesse de la pédale.

13. Procédé selon les revendications 11 ou 12, **caractérisé en ce que** la grandeur caractéristique du système d'assistance au freinage est la poussée exercée sur la pédale.

14. Appareil de commande destiné à exécuter le procédé selon l'une des revendications 1 à 13.
